# EUROPEAN PATENT APPLICATION

(11) **EP 2 199 849 A1**
(43) Date of publication of application: **23.06.2010**
(21) Application number: 09009743.7
(22) Date of filing: 28.07.2009
(51) Int. Cl.: G02F 1/1343

(54) **Display panel and method of forming the same**

(30) Priority: 09.12.2008 KR 20080124457
(71) Applicant: Samsung Electronics Co., Ltd., Yeongtong-gu Suwon-city, Gyeonggi-do 442-742 (KR)
(72) Inventor: Hwang, Jaehoon, Seocho-gu Seoul (KR); Jang, Yong-Kyu, Hwaseong-si Gyeonggi-do (KR); Kim, Sang-Woo, Suwon-si Gyeonggi-do (KR); Shin, Ae, Suwon-si Gyeonggi-do (KR); Shim, Chang-Woo, Seoul (KR)
(74) Representative: Weitzel, Wolfgang

(57) **Abstract**

A display device having a gate line on a first substrate, a gate insulating layer covering the gate line, a semiconductor layer on the gate insulating layer, a data line intersecting the gate line and including a source electrode and a drain electrode facing the source electrode on the semiconductor layer, a connection assistant separated from the data line, a passivation layer covering the data line and including contact holes exposing the connection assistant and a pixel electrode, including a plurality of sub-pixel electrodes, and formed on the passivation layer. The sub-pixel electrodes are electrically connected to each other through the connection assistant and at least one of the sub-pixel electrodes is electrically connected to the drain electrode. The connection assistant is connected to facing edges of adjacent sub-pixel electrodes and is disposed at about ¼ the distance from the end of the left or the right side of the sub-pixel electrode.

## Description

### BACKGROUND OF THE INVENTION

FIELD OF THE INVENTION

Exemplary embodiments of the present invention relate to a thin film transistor array panel for a liquid crystal display.

DISCUSSION OF THE BACKGROUND

A liquid crystal display (LCD) is one of the most widely used flat panel displays. An LCD includes two panels provided with field-generating electrodes such as pixel electrodes and a common electrode and a liquid crystal (LC) layer interposed therebetween. The LCD displays images by applying voltages to the field-generating electrodes to generate an electric field in the LC layer, which determines orientations of LC molecules in the LC layer to adjust polarization of incident light.

Among LCDs, a vertical alignment (VA) mode LCD, which aligns LC molecules such that the long axes of the LC molecules are perpendicular to the panels in the absence of an electric field, is spotlighted because of its high contrast ratio and wide reference viewing angle.

The wide viewing angle of the VA mode LCD can be realized by apertures in the field-generating electrodes and protrusions on the field-generating electrodes. Since the apertures and the protrusions can determine the tilt directions of the LC molecules, the tilt directions can be distributed in several directions by using the apertures and the protrusions, thereby widening the reference viewing angle.

However, because the LC molecules disposed in the corner of the connection assistants in the field-generating electrodes are not influenced by the fringe field, they may be arranged in arbitrary directions in response to the application of a driving voltage.

When the LC molecules are arbitrarily arranged, collisions between the LC molecules may be generated in arbitrary positions, which may cause an undesired afterimage.

### SUMMARY OF THE INVENTION

Exemplary embodiments of the present invention provide a liquid crystal display having improved display characteristics by maximizing the LC molecules influenced by the fringe field and minimizing the afterimage due to the collisions.

Additional features of the invention will be set forth in the description which follows, and in part will be apparent from the description, or may be learned by practice of the invention.

An exemplary embodiment of the present invention discloses a display device having a first substrate; a second substrate facing the first substrate; a gate line disposed on the first substrate; a data line intersecting the gate line; a thin film transistor arranged near a crossing of the gate line and the data line; a gate electrode of the thin film transistor being connected to the gate line, a source electrode of the thin film transistor being connected to the data line, and a drain electrode of the thin film transistor being connected to a pixel electrode to apply a voltage to a liquid crystal layer; a passivation layer disposed on the data line, the passivation layer comprising a contact hole exposing the drain electrode in an aperture area; a pixel electrode disposed on the passivation layer and connected to the drain electrode, the pixel electrode comprising a plurality of sub-pixel electrodes and a connection assistant connecting the sub-pixel electrodes to each other; a plurality of apertures respectively formed on the center position of the sub-pixel electrodes; and a transparent storage electrode charge coupled with the pixel electrode.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

Fig. 1 is a layout view of an LCD according to an exemplary embodiment of the present invention.

Fig. 2 is a cross-sectional view taken along line I-I' of Fig 1.

Fig. 3A, Fig. 3B, Fig. 3C, Fig. 3D, and Fig. 3E are layout views of an LCD according to exemplary embodiments of the present invention.

Fig. 4 is a layout view of a common electrode panel of the LCD shown in Fig. according to an exemplary embodiment the present invention.

Fig. 5 is a layout view of a LCD according to an exemplary embodiment of the present invention, including first to third sub-pixel electrodes.

Fig. 6 is a cross-sectional view taken along line II-II' of Fig. 5.

Fig. 7 is a layout view of an LCD according to an exemplary embodiment of the present invention.

Fig. 8 is a cross-sectional view taken along line III-III' of Fig. 7.

### DETAILED DESCRIPTION OF ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

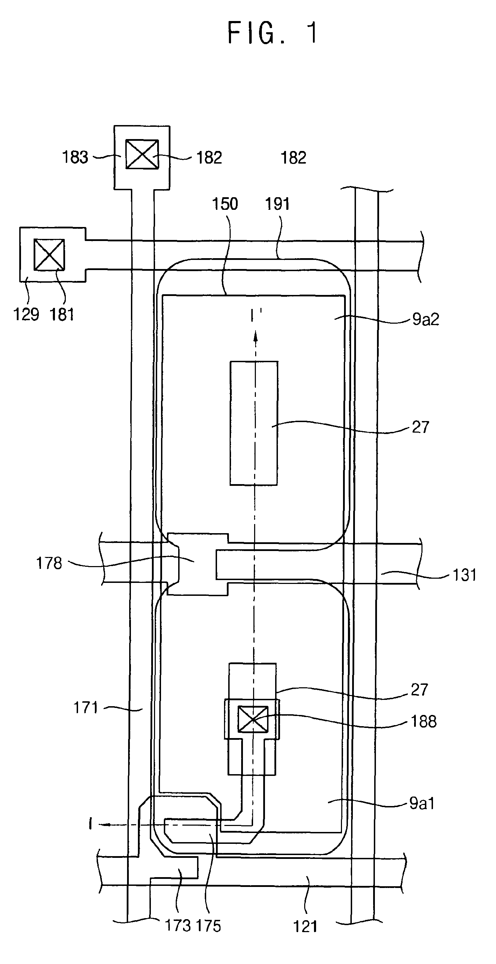

An exemplary embodiment of an LCD according the present invention is described in detail with reference to Fig. 1, Fig. 2, Fig. 3, and Fig. 4.

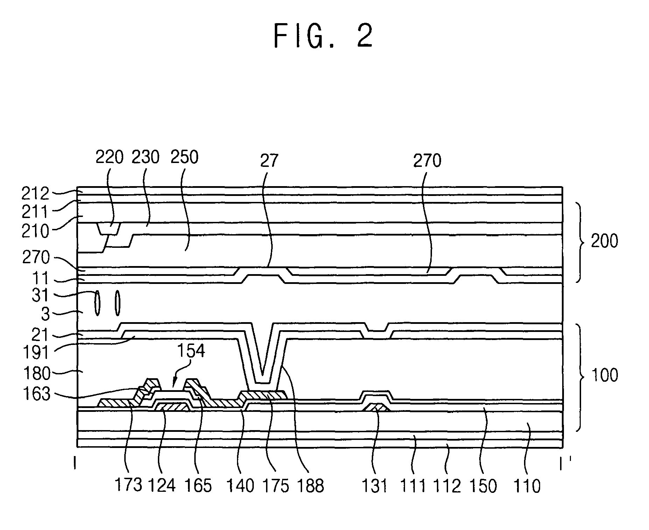

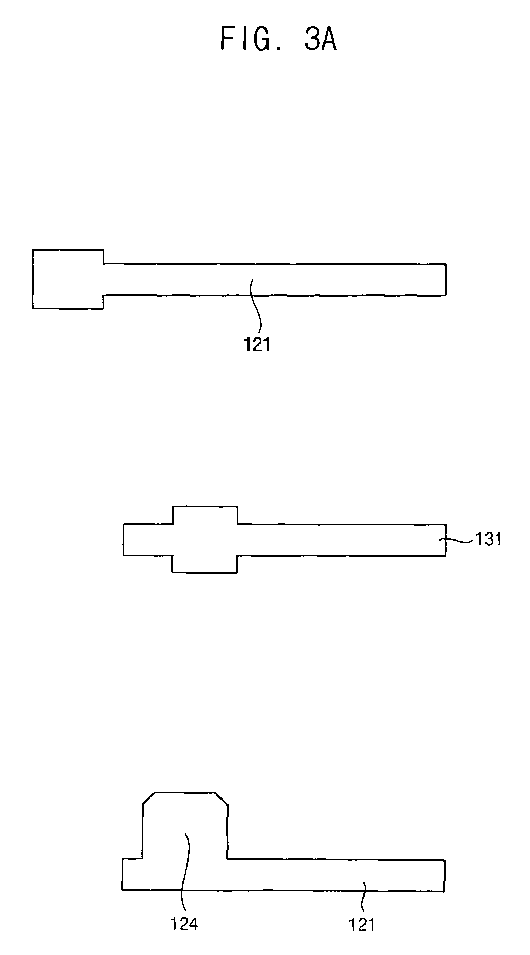

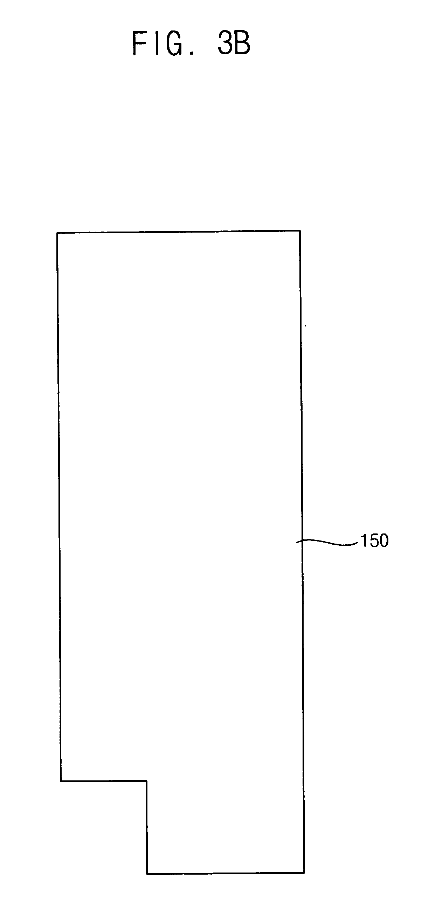

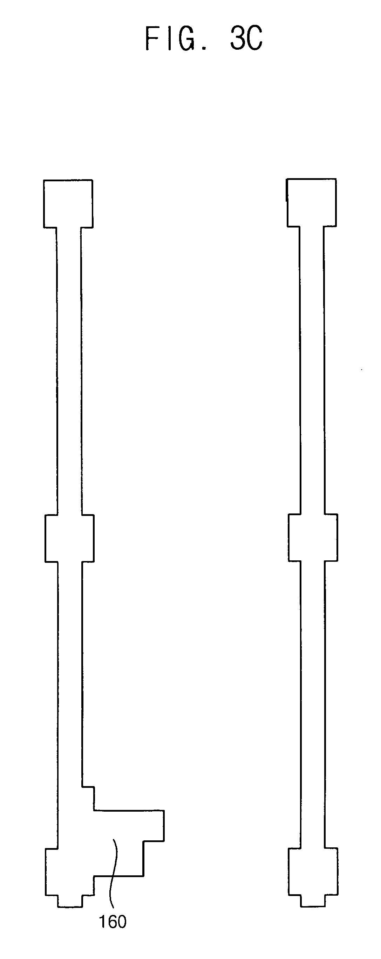

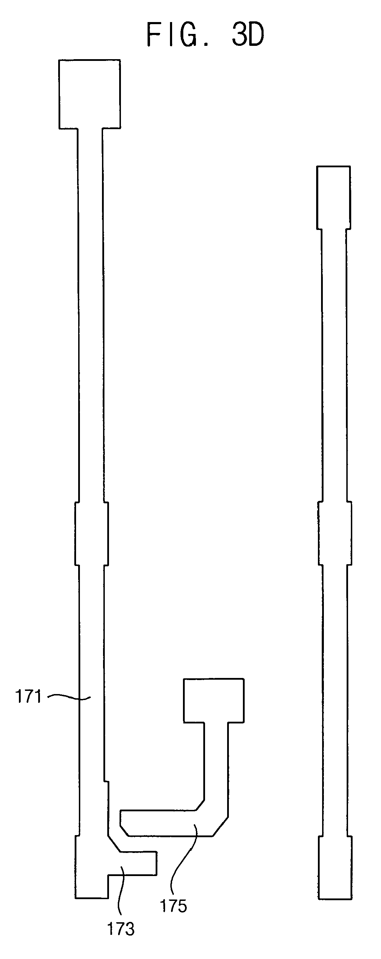

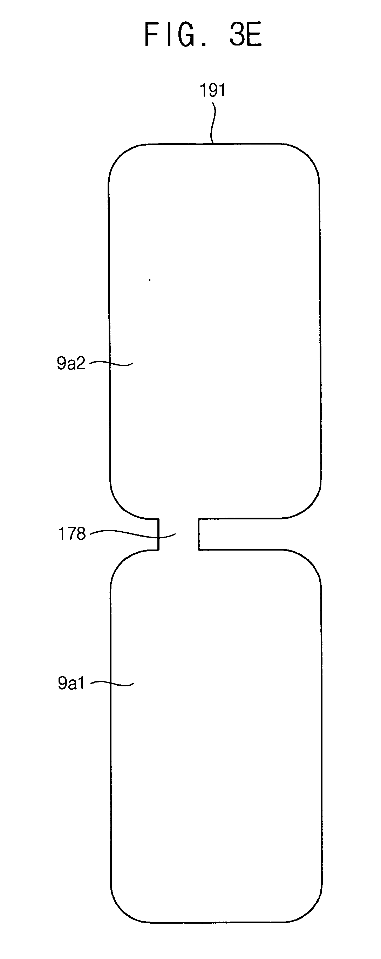

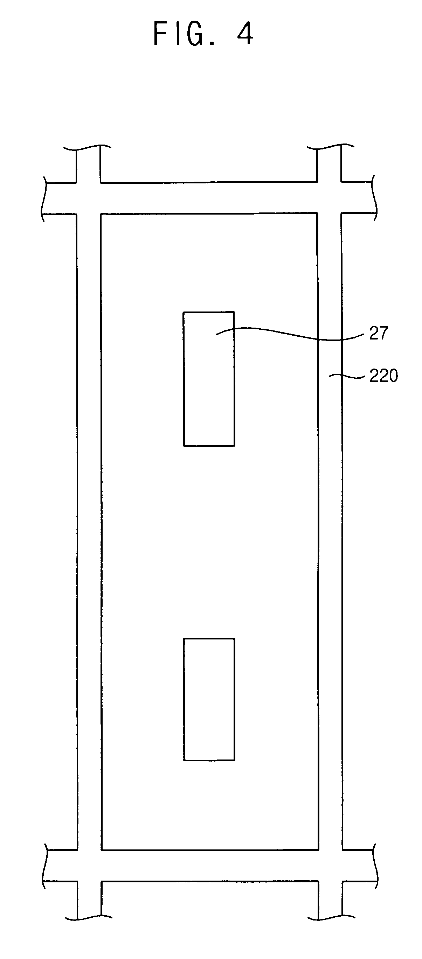

Fig. 1 is a layout view of an LCD according to an exemplary embodiment of the present invention, Fig. 2 is a cross-sectional view taken along line I-I' of Fig 1, and Fig. 3A, Fig. 3B, Fig. 3C, Fig. 3D, and Fig. 3E are layout views of an LCD according to exemplary embodiments of the present invention. Fig. 4 is a layout view of a common electrode panel of the LCD shown in Fig. 1 according to an exemplary embodiment the present invention.

An LCD includes a Thin Film Transistor (TFT) array panel 100, a common electrode panel 200, and an LC layer 3 interposed between the panels 100 and 200.

The TFT array panel 100 is now described in detail with reference Fig. 1, Fig. 2, Fig. 3, and Fig. 5.

A plurality of gate lines 121 and boost lines 131 are formed on an insulating substrate 110 made of a material such as transparent glass. The gate lines 121 extend substantially in a transverse direction, are separated from each other, and transmit gate signals.

In an exemplary embodiment, the gate lines 121 and boost lines 131 may be made of an Al-containing metal such as Al and an Al alloy, a Ag-containing metal such as Ag and a Ag alloy, a Cu-containing metal such as Cu and a Cu alloy, a Mo-containing metal such as Mo and a Mo alloy, Cr, Ti, or Ta. The gate lines 121 and the boost lines 131 may have a multilayered structure including two films having different physical characteristics. In an exemplary embodiment, one of the two films may be made of a low resistivity metal including, but not limited to, an Al-containing metal, a Ag-containing metal, and a Cu-containing metal for reducing signal delay or voltage drop in the gate lines 121 and the boost lines 131. The other film may be made of a material such as a Mo-containing metal, Cr, Ta, or Ti, which has good physical, chemical, and electrical contact characteristics with other materials such as indium tin oxide (ITO) or indium zinc oxide (IZO). In one exemplary embodiment, the combination of the two films includes a lower Cr film and an upper A1 alloy film, and a lower Al film and an upper Mo film. However, the gate line 121 and the boost line 131 may be made of various metals or conductors as is suitable for the purpose described herein.

Lateral sides of the gate lines 121 and boost lines 131 are tapered relative to a surface of the insulating substrate 110. An inclination angle of the gate lines 121 and boost lines 131 relative to the surface of the substrate ranges from about 30 to about 80 degrees.

A gate insulating layer 140 is formed on the gate lines 121 and boost lines 131. In one exemplary embodiment, the gate insulating layer 140 may be made of silicon nitride (SiNx).

A plurality of semiconductor islands 154 are formed on the gate insulating layer 140. As in the illustrated exemplary embodiment, each semiconductor island 154 is disposed on the gate electrodes 124. In one exemplary embodiment, the semiconductor islands 154 are made of hydrogenated amorphous silicon (abbreviated to "a-Si") or polysilicon.

A plurality of ohmic contact islands 163 and 165 are formed on the semiconductor islands 154. As in the illustrated exemplary embodiment, each of the ohmic contact islands 163 and 165 are located in pairs on the semiconductor islands 154. In one exemplary embodiment, the ohmic contact islands 163 and 165 are made of silicide or n+ hydrogenated a-Si heavily doped with an n-type impurity such as phosphorous.

Lateral sides of the semiconductor islands 154 and the ohmic contacts 163 and 165 are inclined relative to a surface of the substrate 110. The inclination angles thereof are in a range between about 30 to about 80 degrees.

A plurality of data lines 171, a plurality of drain electrodes 175 separated from the data lines 171, and a plurality of connection assistants 178 are formed on the ohmic contacts 163 and 165 and the gate insulating layer 140.

Each drain electrode 175 is separated from the data lines 171 and faces the source electrodes 173 with respect to the gate electrode 124.

The TFT comprises a gate electrode 124, a source electrode 173, and a drain electrode 175 along with the semiconductor island 154. The TFT has a channel formed in a portion of the semiconductor island 154 that is disposed between the source electrode 173 and the drain electrode 175.

The connection assistants 178 extend substantially parallel to the data lines 171 and are separated from the data lines 171.

In one exemplary embodiment, the data lines 171, the drain electrodes 175, and the connection assistants 178 are made of a refractory metal such as Cr, Mo, Ti, Ta, or alloys thereof. The data lines 171, the drain electrodes 175, and the connection assistants 178 may also have a multilayered structure including a low-resistivity film and a good-contact film. In one exemplary embodiment, the multilayered structure includes a combination of a lower Mo (alloy) film, an intermediate Al (alloy) film, and an upper Mo (alloy) film, as well as the above-described combinations of a lower Cr film or an upper Al (alloy) film and a lower Al (alloy) film and an upper Mo (alloy) film. However, the data lines 171, the drain electrodes 175, and the connection assistants 178 may be made of various metals or conductors as is suitable for the purpose described herein.

The data lines 171 and the drain electrodes 175 may have tapered lateral sides and the inclination angles thereof may range about 30 to about 80 degrees.

The ohmic contact islands 163 and 165 are interposed only between the underlying semiconductor islands 154, the overlying data lines 171, and the overlying drain electrodes 175 thereon, thereby reducing the contact resistance therebetween. The semiconductor islands 154 include a plurality of exposed portions, which are not covered with the data lines 171 or the drain electrodes 175. Such portions are located between the source electrodes 173 and the drain electrodes 175.

A passivation layer 180 is formed on the data lines 171, the drain electrodes 175, the connection assistants 178, and the exposed portions of the semiconductor islands 154. In one exemplary embodiment, the passivation layer 180 is made of an inorganic insulator including, but not limited to, silicon nitride or silicon oxide, a photosensitive organic material having a good flatness characteristic, or a low dielectric insulating material having a dielectric constant lower than 4.0, such as a-Si:C:O or a-Si:O:F formed by plasma enhanced chemical vapor deposition (PECVD). The passivation layer 180 may include a multilayer structure having a lower film of an inorganic insulator and an upper film of an organic insulator such that it takes the excellent insulating characteristics of the organic insulator while preventing the exposed portions of the semiconductor islands 154 from being damaged by the organic insulator.

The passivation layer 180 has a plurality of contact holes 182, 185, and 188 exposing the end portions 183 of the data lines 171, the end portions of the drain electrodes 175, and the connection assistants 178. The passivation layer 180 and the gate insulating layer 140 have a plurality of contact holes 181 exposing the end portions 129 of the gate lines 121.

A plurality of pixel electrodes 191 is formed on the passivation layer 180. In one exemplary embodiment, the pixel electrodes 191 may be made of a transparent conductor such as Indium Tin Oxide (ITO) or indium zinc oxide (IZO) or a reflective conductor such as Ag or Al.

The pixel electrodes 191 include a first sub-pixel electrode 9a1 and a second sub-pixel electrode 9a2, which are arranged substantially in a line and have a substantially square shape. The first sub-pixel electrode 9a1 and the second sub-pixel electrode 9a2 may have rounded corners in a layout view. The first sub-pixel electrode 9a1 is connected to the drain electrode 175 through a contact hole 188, and the first sub-pixel electrode 9a1 and the second sub-pixel electrode 9a2 are respectively connected to the connection assistants 178 through the contact holes 185.

The pixel electrodes 191 are physically and electrically connected to the drain electrodes 175 through the first sub-pixel electrodes 9a1, such that the pixel electrodes 191 receive data voltages from the drain electrodes 175 and the second sub-pixel electrodes 9a2 receive data voltages from the connection assistants 178.

The pixel electrodes 191 supplied with data voltage generate electric fields in cooperation with a common electrode 270, which determine the orientation of liquid crystal molecules in the liquid crystal layer 3.

A pixel electrode 191 and the common electrode 270 of the common electrode panel 200 form a liquid crystal capacitor, which stores applied voltage after the TFT is turned off.

The description of the common electrode panel 200 follows with reference to Fig. 2 and Fig. 4. A light blocking member 220, called a black matrix for preventing light leakage, is formed on an insulating substrate 210 made of a material such as transparent glass.

A plurality of color filters 230 are formed on the insulating substrate 210. The color filters 230 are disposed substantially in the areas enclosed or surrounded by the light blocking member 220. As in the illustrated exemplary embodiment, the color filters 230 may extend substantially along the longitudinal direction along the pixel electrodes 191. In one exemplary embodiment, the color filters 230 may represent one of the primary colors such as red, green, and blue colors.

An overcoat 250 for preventing the color filters 230 from being exposed and for providing a substantially flat surface is formed on the color filters 230 and the light blocking member 220. In an exemplary embodiment, the overcoat 250 may be omitted.

In one exemplary embodiment the common electrode 270 made of a transparent conductive material such as ITO and IZO is formed on the overcoat 250 and is relatively thicker than the pixel electrodes 191.

The common electrode 270 has a plurality of sets of circular apertures 27.

A set of circular apertures 27 faces substantially the center of the first sub-pixel electrode 9a1 and the second sub-pixel electrode 9a2. In an exemplary embodiment, the circular apertures 27 overlap the contact holes 188.

Alignment layers 11 and 21 are coated on inner surfaces of the TFT array panel 100 and common electrode panel 200. The alignment layers 11 and 21 may be homeotropic. Polarizer 112 may be provided on outer surface of the TFT array panel 100 and polarizer 212 may provide an outer surface of the common electrode panel 200, such that their polarization axis may be crossed and one of the transmissive axis may be parallel to the gate lines 121. In an exemplary embodiment, one of the polarizers may be omitted when the LCD is a reflective LCD.

The LCD may further include at least one retardation film 111 and 211 for compensating the retardation of the LC layer 3. The retardation film 111 and 211 has birefringence and retards opposite to the LC layer 3. The retardation film 111 and 211 may include a uniaxial or biaxial optical compensation film, and in particular, a negative uniaxial compensation film.

In an exemplary embodiment, the LC layer 3 has negative dielectric anisotropy and is subjected to a vertical alignment such that LC molecules 31 in the LC layer 3 are aligned with their long axes substantially vertical to the surfaces of the TFT array panel 100 and the common electrode panel 200 in the absence of an electric field. Accordingly, incident light cannot pass the crossed polarization system including the polarizer.

Upon application of the common voltage to the common electrode 270 and the data voltage to the pixel electrodes 191, an electric field substantially perpendicular to the surfaces of the TFT array panel 100 and the common electrode panel 200 is generated. The LC molecules 31 tend to change their orientations in response to the electric field such that their long axes are substantially perpendicular to the field direction. The common electrode 270 and the pixel electrodes 191 are essentially used as field-generating electrodes.

The circular apertures 27 of the common electrode 270 and edges of the pixel electrodes 191 distort the electric field resulting in a horizontal component that is substantially perpendicular to the edges of the circular apertures 27 and the edges of the pixel electrodes 191. Accordingly, the LC molecules 31 on each sub-pixel electrode 9a1 and sub-pixel electrode 9a2 are tilted in a direction by the horizontal component and the azimuthal distribution of the tilt directions are localized to various directions, thereby increasing the viewing angle of the LCD.

When the pixel electrode includes a connection that connects sub-pixel electrode 9a1 and sub-pixel electrode 9a2 and is formed on the same layer as the pixel electrode 191, the connection distorts the alignments of the LC molecules 31 and the LC molecules 31 on the connection are aligned in arbitrary directions. Accordingly, collisions of the LC molecules 31 are generated. The pixel electrode 191 is connected to each thin film transistor and has two sub-pixel electrodes 9a1 and 9a2 and connection assistants 178 connecting sub-pixel electrode 9a1 to sub-pixel electrode 9a2. One of the sub-pixel electrodes is electrically connected to the drain electrode. The connection assistants 178 are disposed on the left or the right position from the center of the sub-pixel electrodes 9a1 and 9a2 and connect each the sub-pixel electrodes 9a1 and 9a2. In an exemplary embodiment, the connection assistants 178 are disposed on about ¼ positions from the end of left or right side of each sub-pixel electrode 9a1 and 9a2.

The connection assistants 178 influence the alignment of the LC molecules 31 and, therefore, many collisions of the LC molecules 31 are generated when the connection assistants 178 are disposed on the center of the sub-pixel electrodes 9a1 and 9a2. Texture energy in the left side or the right side of the connection assistants 178 can be randomized easily.

However, the LC molecules 31 can be stable if the connection assistants 178 are disposed in an asymmetric position and therefore an undesired afterimage due to the collisions may not be generated.

Fig. 3A, Fig. 3B, Fig. 3C, Fig. 3D, and Fig. 3E are layout views of an LCD according to exemplary embodiments of the present invention. The gate lines 121, the gate electrodes 124 and the boost line 131 are formed on the first substrate as shown in Fig. 3A. A transparent storage electrode 150 is formed on the boost line 131, as shown in Fig. 1 and Fig. 3B. The data lines 171 and the source electrodes 173 may be formed in the next step as shown in Fig. 3C. The drain electrodes 175 are formed in the next step as shown in Fig. 3D. Otherwise they may be formed simultaneously with the data lines 171 and the source electrodes 173. Passivation layer 180 is formed and contact holes 188 are etched in the next step. The pixel electrodes 191 are formed on the passivation layer 180 as shown in Fig. 3E.

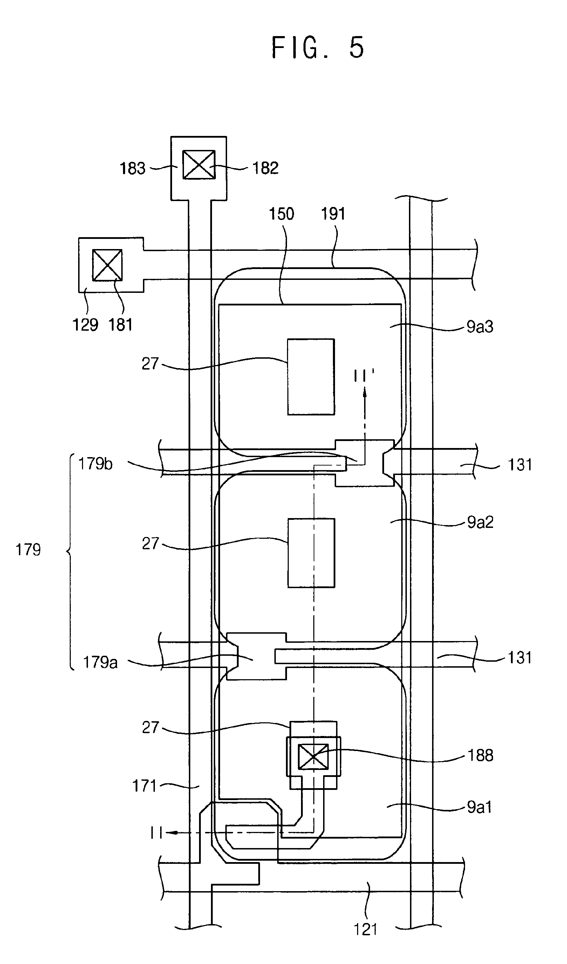

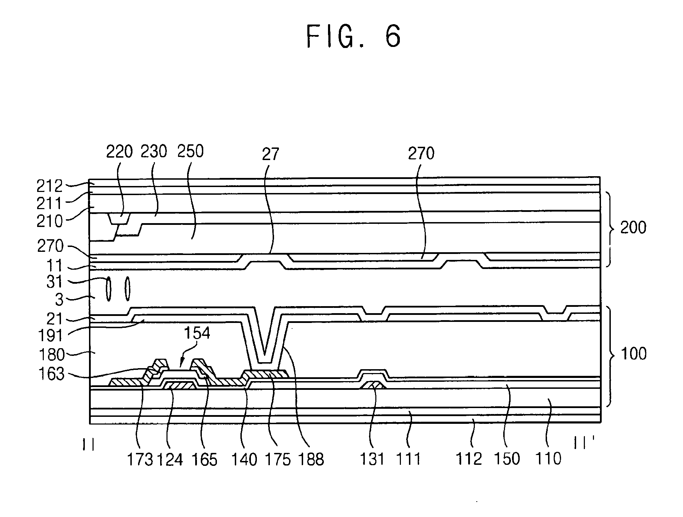

Fig. 5 is a layout view of a LCD according to an exemplary embodiment of the present invention including first to third sub-pixel electrodes, and Fig. 6 is a cross-sectional view taken along line II-II' of Fig. 5. In one exemplary embodiment as illustrated in Fig. 5 and Fig. 6, the first sub-pixel electrode 9a1, the second sub-pixel electrode 9a2, and the third sub-pixel electrode 9a3 of the pixel electrodes 191 are connected to each other through connection assistants 179 that are formed with the same layer as the pixel electrodes 191 in the LCD.

The connection assistants 179 include a left connection assistant 179a and a right connection assistant 179b that are respectively disposed in the left and right sides of the first to third sub-pixel electrodes 9a1 to 9a3 of the pixel electrodes 191. One connection assistant 179a is shown between sub-pixel electrode 9a1 and sub-pixel electrode 9a2 on a left side and the other connection assistant 179b is disposed between sub-pixel electrode 9a2 and sub-pixel electrode 9a3 on the right ride. The connection assistants 179a and 179b are formed within a columnar area defined by the pixel electrode 191, within the left and right edges of the sub-pixel electrodes 9a1, 9a2 and 9a3 and alternate between the left and the right sides of the sub-pixel electrodes 9a1, 9a2 and 9a3. It is preferable that the left connection assistant 179a and the right connection assistant 179b make a pair. In the illustrated exemplary embodiment, although the collisions of the LC molecules 31 are generated, the collisions are disposed to one side of the pixel electrodes 191 randomly such that it is difficult for them to be recognized.

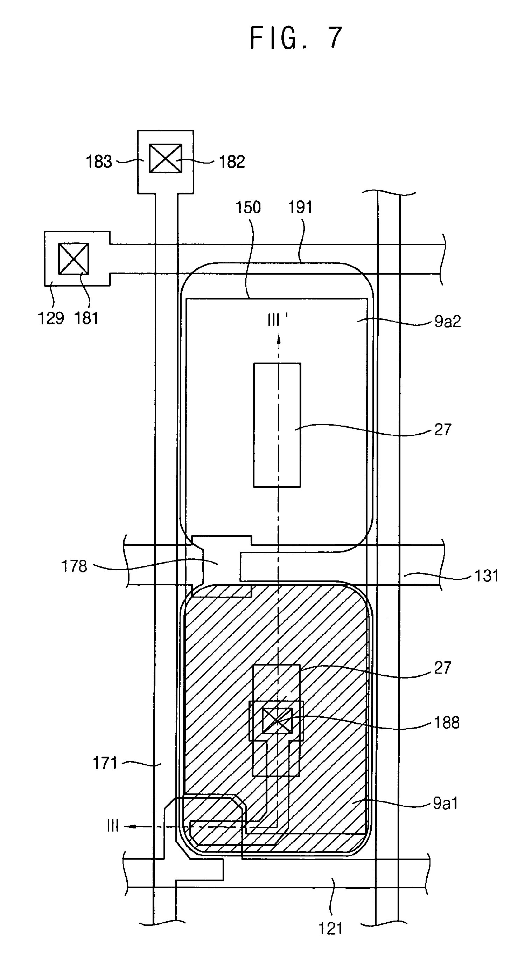

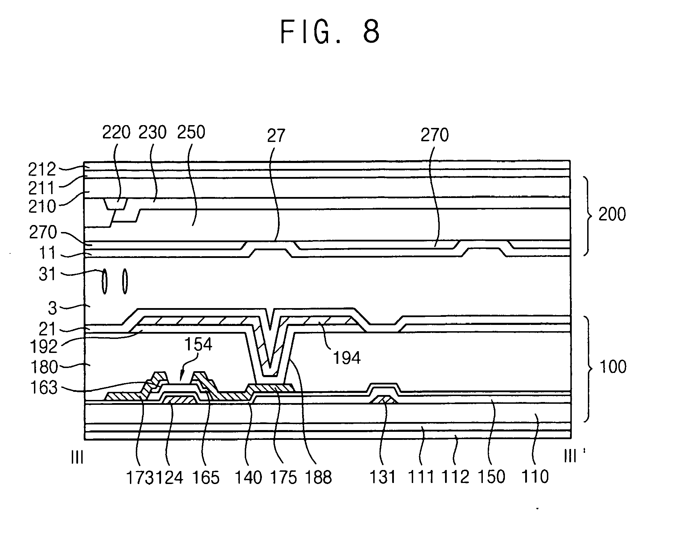

Another exemplary embodiment of an LCD according to the present invention will now be described in detail with reference to Fig. 7 and Fig. 8.

Fig. 7 is a layout view of an LCD according to an exemplary embodiment of the present invention and Fig. 8 is a cross-sectional view taken along line III-III' of Fig. 7.

Referring to Fig. 7 and Fig. 8, an LCD includes a TFT array panel 100, a common electrode panel 200, an LC layer 3 interposed between the TFT array panel 100 and the common electrode panel 200, and a polarizer 112 attached to the outer surface of the TFT array panel and polarizer 212 attached to the outer surface the common electrode panel 200.

Regarding the TFT array panel 100, a plurality of gate lines 121, including gate electrodes 124 and end portions 129 are formed on a insulating substrate 110, and a gate insulating layer 140, a plurality of semiconductor islands 154, and a plurality of ohmic contact islands 163 and 165 are sequentially formed thereon. A plurality of data lines 171, including source electrodes 173 and end portions 183, a plurality of drain electrodes 175, and a plurality of connection assistants 178, are formed on the ohmic contact islands 163 and 165, and a passivation layer 180 is formed thereon. A plurality of contact holes 181, 182, 185, and 188 are provided at the passivation layer 180 and the gate insulating layer 140. A plurality of pixel electrodes 191 and a plurality of contact assistants 81 and 82 are formed on the passivation layer 180, and an alignment layer 11 is coated thereon.

Regarding the common electrode panel 200, a light blocking member 220, a plurality of color filters 230, a common electrode 270 that includes a plurality of circular apertures 27, and an alignment layer 11 are formed on an insulating substrate 210.

Different from the LCD shown in Figs. 1 to 6, the LCD in the illustrated exemplary embodiment of Fig. 7 and Fig. 8 is a transflective type that includes a reflective electrode and transmissive electrode.

The LCD including the TFT array panel 100, the common electrode panel 200, and the LC layer 3 has a transmission region TA and a reflection region RA. The transmission region TA includes a transmission electrode 192 and the reflection region RA includes a reflection electrode 194. The transmission region TA is a region where the reflection electrode 194 is not disposed and the reflection region RA is a region where the reflection electrode 194 is disposed.

The light in the transmission region TA passes through the liquid crystal layer 3 from the TFT array panel 100 to the common electrode panel 200 to display images, while the light in the reflection region RA passes through the liquid crystal layer 3 twice by being reflected by the reflection electrode 194 to display the images.

In exemplary embodiments, the passivation layer 180 may have an uneven surface to maximize diffused reflection and the reflection electrode 194 may also have an uneven surface depending on or corresponding to the uneven surface of the passivation layer 180.

In one exemplary embodiment, the transmission electrode 192 is made of a transparent conductive material such as ITO or IZO and the reflection electrode 194 is made of a reflective conductor such as Ag, Al, Cr, and their alloys. In exemplary embodiments, the reflection electrode 194 may have a double-layered structure including an upper layer made of a reflective conductor such as Ag, Al, and their alloys having low resistance, and a lower layer material such as Mo, a Mo alloy, Cr, Ta, and Ti having good contact characteristics with other materials such as ITO and IZO.

The reflection electrode 194 is only disposed on the first sub-pixel electrode 9a1. In exemplary embodiments, the reflection electrode 194 may be disposed on the transmission electrode 192 on the other sub-pixel electrode 9a2.

In exemplary embodiments, color filters 230 corresponding to the transmission region TA are relatively thinner than those color filters 230 corresponding to the reflection region RA. Thus in some embodiments of the invention the cell gap in the transmission region TA is twice as large as the cell cap in the reflection region RA. To display images, the light from the back light passes through the liquid crystal layer in transmission region TA. However, the light incident from the external area firstly passes through the liquid crystal layer and is then reflected by the reflection electrode, which means the reflected light passes through the color filters twice, which is different from the transmitted light. Therefore the color filter layer 230 in the reflection region RA needs to be adjusted.

The color filters 230 corresponding to the reflection region RA may have light holes 260 to compensate the differences of color impression due to the differences of light paths.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A display device, comprising:
a first substrate;
a second substrate facing the first substrate;
a gate line disposed on the first substrate;
a data line intersecting the gate line;
a thin film transistor arranged near a crossing of the gate line and the data line;
a gate electrode of the thin film transistor being connected to the gate line, a source electrode of the thin film transistor being connected to the data line, and a drain electrode of the thin film transistor being connected to a pixel electrode to apply a voltage to a liquid crystal layer;
a passivation layer disposed on the data line, the passivation layer comprising a contact hole exposing the drain electrode in an aperture area;
a pixel electrode disposed on the passivation layer and connected to the drain electrode, the pixel electrode comprising a plurality of sub-pixel electrodes and a connection assistant connecting the sub-pixel electrodes to each other;
a plurality of apertures respectively formed on the center position of the sub-pixel electrodes; and
a transparent storage electrode charge coupled with the pixel electrode.

2. The display device of claim 1, wherein the connection assistant is disposed on a first position or a second position that is shifted from the center of the pixel electrode.

3. The display device of claim 1, wherein the first position or the second position is disposed about ¼ the distance from an edge of the sup-pixel electrode.

4. The display device of claim 1, wherein the connection assistant is connected to facing edges of adjacent sub-pixel electrodes.

5. The display device of claim 1, wherein the connection assistant is formed on the same layer as the pixel electrode.

6. The display device of claim 1, wherein the connection assistant is formed on a different layer than the pixel electrode and is connected to the pixel electrode through a contact hole.

7. The display device of claim 1, wherein the sub-pixel electrodes each have a substantially rectangular shape with rounded corners.

8. The display device of claim 1, wherein the sub-pixel electrodes comprise a transmission electrode.

9. The display device of claim 1, wherein at least one sub-pixel electrode comprises a reflection electrode.

10. The display device of claim 1, wherein the apertures are formed on the sub-pixel electrodes of the first substrate.

11. The display device of claim 1, wherein the apertures are formed on a common electrode of the second substrate.

12. The display device of claim 1, wherein the apertures have a circular shape.
